(19) Europäisches Patentamt
European Patent Office
Office européen des brevets

(11) Publication number: **0 054 900**
**A1**

# (12) EUROPEAN PATENT APPLICATION

(21) Application number: **81110489.2**

(22) Date of filing: **16.12.81**

(51) Int. Cl.³: **C 08 L 71/04**, C 08 L 25/10

(30) Priority: **23.12.80 US 220165**

(43) Date of publication of application: **30.06.82**
**Bulletin 82/26**

(84) Designated Contracting States: **DE FR GB NL**

(71) Applicant: **GENERAL ELECTRIC COMPANY, 1 River Road, Schenectady New York 12305 (US)**

(72) Inventor: **Cooper, Glenn Dale, 13, Sussex Road, Glenmount, New York (US)**
Inventor: **Katchman, Arthur, 13, Sussex Road, Glenmount, New York (US)**

(74) Representative: **Catherine, Alain et al, GETSCO 42, avenue Montaigne, F-75008 Paris (FR)**

## (54) Composition of polyphenylene ethers with core-shell rubber-modified polystyrene.

(57) There are provided thermoplastic compositions comprising a polyphenylene ether and a rubber modified polystyrene resin having a discontinuous phase comprised largely of particles consisting of a core of polystyrene in a shell of a diene rubber membrane, said particles being spherical in shape, and highly uniform in size, from about 0.2 to 0.4 $\pi$ in diameter, with an average diameter of 0.3 $\pi$. Such compositions provide molded articles with substantial and unexpected properties in impact resistance transparency and surface gloss, particularly at low mold temperatures in comparison with known compositions of rubber modified polystyrene alone or those of other polystyrenes combined with polyphenylene ethers.

EP 0 054 900 A1

# Composition of polyphenylene ethers with core-shell rubber-modified polystyrene

The invention relates to thermoplastic compositions and, more particularly, to thermoplastic compositions comprising a polyphenylene ether resin and a rubber modified polystyrene resin comprising a continuous polystyrene phase containing dispersed particles consisting largely of a core of polystyrene, in a shell of diene rubber membrane, said particles being spherical in shape, highly uniform in size, of from about 0.2 to 0.4 µm , with an average diameter of 0.3 µm , The compositions when molded provide molded articles with substantial and unexpected improvements in impact resistance, or strength, transparency and surface gloss, particularly at low mold temperatures, in comparison with known compositions of rubber modified polystyrenes alone or those of other polystyrenes combined with polyphenylene ethers.

The polyphenylene ethers are known and described in numerous publications, including Hay, U.S. Patent N° 3,306,874 and 3,306,875 ; and Stamatoff, U.S. Patent N° 3,257,357 and 3,257,358, all incorporated herein by reference. They are useful for many commercial applications requiring high temperature resistance and, because they are thermoplastic, they can be formed into films, fibers and molded articles. In spite of these desirable properties, parts molded from polyphenylene ethers have low impact strength. In addition, the relatively high melt viscosities and softening points are considered a disadvantage for many uses. Films and fibers can be formed from polyphenylene ethers on a commercial scale using solution techniques, but melt processing is commercially unattractive because of the required high temperatures needed to soften the polymer and the problems associated therewith such as instability and discoloration. Such techniques also require specially designed process equipment to operate at elevated temperatures. Molded articles can be formed by melt processing techniques, but, again, the high temperatures required are undesirable. For example, while polyphenylene oxide is a

tough, temperature-resistant engineering polymer, it is difficult to process.

It is known in the art that the properties of the polyphenylene ethers can be materially altered by forming compositions with other polymers. For example, U.S. Patent N° 3,379,792 discloses that flow properties of polyphenylene ethers are improved by preparing a composition thereof with from about 0.1 to 25 parts by weight of a polyamide. In U.S. Patent N° 3,361,851 polyphenylene ethers are formed into compositions with polyolefins to improve impact strength and resistance to aggressive solvents. In U.S. Patent N° 3,383,435, incorporated herein by reference, there is provided a means to simultaneously improve the melt processability of the polyphenylene ethers and upgrade many properties of polystyrene resins. The latter patent discloses that polyphenylene ethers and polystyrene resins, including many modified polystyrenes are combinable in all proportions to provide compositions having many properties improved over those of either of the components.

Preferred embodiments of U.S. Patent N° 3,383,435 are compositions comprising a rubber modified high-impact polystyrene and a poly-(2,6-dialkyl-1,4-phenylene)ether. Such compositions are important commercially because they provide both an improvement in the melt processability of the polyphenylene ether and an improvement in the impact resistance of parts molded from the compositions. Furthermore, such compositions of the polyphenylene ether and the rubber modified high-impact polystyrene may be custom formulated to provide pre-determined properties ranging between those of the polystyrene resin and those of the polyphenylene ether by controlling the ratio of the two polymers. The reason for this is that the composition exhibit a single set of thermodynamic properties rather than the two distinct sets of properties, i.e., one for each of the components of the composition, as is typical with compositions or blends of the prior art.

In preferred embodiments of U.S. Patent N° 3,383,435, rubber modified polystyrenes are used in

compositions with polyphenylene ethers because they provide an increase in toughness, e.g., resistance to impact fracture. However, the use of commercially available graft type rubber modified high impact polystyrenes, such as the LUSTREX HT-88 employed in Example 7 of U.S. Patent N° 3,383,435, causes a sacrifice in transparency, possibly due to scattering of light by the dispersed elastomeric particulate phase in the rubber modified polystyrene. Moreover, the average of such rubber particles are greater in diameter than about 1 µm because it has been stated often that if smaller particles are used, impact strength will be lowered.

In British Patent N° 1,180,085, it is disclosed that careful attention to the morphology, i.e., the size and nature of the dispersed phase, in copolymers comprising alkyl acrylates and styrene monomers, rendered impact resistant by inclusion of rubber particles, will lead to enhanced impact strength, without loss in transparency, even though very small particles are used. It is suggested in the British patent that the acrylate copolymer should fill the inside of dispersed globular particles, and that such particle should have a thin rubbery membrane or shell surrounding it.

The said British patent states, however, that to try the same technique with polystyrene alone is unsuccessful, the product will mold into a material of low impact strength and, also significantly, the resin will be poor in transparency. On page 15 of the British patent, this failure of polystyrene to qualify as a suitable, useful composition is laid, at least in part, to the magnitude of the difference between the refractive index of the rubber component, and the resin, i.e., homopolystyrene, component. Is is stated that such difference must not be in excess of 0.005 refractive index units.

Thus the British patent expressly teaches that the only useful compositions must always include an alkyl methacrylate in the thermoplastic matrix and further that there never can be greater than a 0.005 difference in refractive index between that of the rubber and that of the thermoplastic.

Moreover, there is no suggestion that such compositions will be useful to modify other thermoplastic resins, and carry their transparency into such modified compositions and, particularly, there is no suggestion to use any such resins, and especially entirely polystyrene based resins, in compositions with polyphenylene ethers.

In view of the above, it has now unexpectedly been found that a rubber modified polystyrene in which polystyrene is englobed by a diene rubber membrane and dispersed in spherical particles of highly uniform size throughout a continuous polystyrene phase, while having a diameter of about 0.2 to .0.4 μm with an average diameter of about 0.3μm, will combine with polyphenylene ether resins to give compositions which when molded have higher impact strength, transparency and higher gloss than known blends. The unusual morphology of the rubber modified polystyrene seems to be responsible for the observed advantages. Compositions of polyphenylene ether with a rubber modified polystyrene containing particles in which many polystyrene inclusions are present, are not as tough nor do they have as high a surface gloss.

Figure 1 is a transmission electron microphotograph, 30,00 diameters magnification of a section of rubber modified polystyrene, which would not be used in the instant invention, showing the prevailing morphology of the rubber particles in a commercial high impact polystyrene prepared by graft polymerization, such as, a composition known as FG-834 sold by Foster Grant Co. The numerous "salami" like spots within each particle are due to polystyrene inclusions throughout each particle. The particles are cellular in structure rather than core-shell structures. Furthermore, the particles are all ellipsoidal in shape. This is also the case in another rubber modified high impact polystyrene, known as BASF 2790, sold by the BASF Company, of which Figure 2 is a transmission electron microphotograph, 30,000 diameters magnification. This has a core-shell structure with an average particle size of about .2 to 0.7 μm. While BASF 2790 is of the core-shell type it contains many particles composed of 2-4 cells.

Figure 3 is a transmission electron microphotograph, at 15,000 diameters magnification of a section of a rubber modified polystyrene which is employed in the instant invention. As distinct from BASF 2790, all the particles of BASF 2791 are single cells. The discontinuous, particulate phase, is seen to consist largely of single particles of polystyrene (light areas) surrounded by a thin rubber (dark area) membrane or shell. The core-shell or englobed particles are seen to be perfectly spherical in shape and extremely uniform in size, from about 0.2 to 0.4 µm in diameter, with an average diameter of about 0.3 µm. An example of such a rubber modified polystyrene is known as BASF 2791 which is commercially available from the BASF Co.

The particles of BASF 2791 are extremely uniform in size, from about 0.2 to 0.4 µm, average estimated about 0.3 µm and are perfectly spherical. Although largely of the core-shell type, with polystyrene core surrounded by a rubber membrane, other types of particles are present as well. Some particles consist simply of a solid rubber sphere, some have a rubber sphere at the core, which is surrounded by a thick shell of polystyrene, which is in turn surrounded by a rubber membrane. A few even more complex structures are present ; spheres of polystyrene with a rubber shell, another shell of polystyrene, and a final shell of rubber. A count of 100 particles in a randomly chosen section of the transmission electron microphotograph showed the following distribution :

| | |
|---|---|
| core-shell | 61 |
| solid rubber spheres | 28 |
| clumps of rubber particles | 6 |
| rubber-polystyrene rubber | 7 |

According to the present invention, in its broadest aspects, there are provided thermoplastic compositions with unexpectedly high impact strength, greatly improved surface gloss and transparency comprising a polyphenylene ether, and a rubber modified polystyrene, the rubber modified polystyrene comprising a continuous polystyrene phase or matrix in which there is uniformly dispersed a discontinuous phase

comprising largely of particles of a styrene homopolymer englobulated in a diene rubber membrane, said particles being spherical in shape and uniform in size and having an average size ranging from about 0.2 to about 0.4 µm, with an average diameter of about 0.3 µm, and the membrane thickness being not in excess of the diameter of the respective particle. The rubber content will range from about 6 to about 15 % by weight of the rubber modified polystyrene component. In general, the compositions according to this invention are prepared by combining said polyphenylene ether and a rubber modified polystyrene to obtain a composition which also has at least two phases, one of which is discontinuous and comprises the rubber-englobed polystyrene particles and the continuous phase comprising polyphenylene ether and polystyrene. Such compositions may be molded to shape using conventional molding procedures.

According to a preferred aspect of this invention, there are provided high impact strength and improved surface gloss thermoplastic compositions comprising :

(a) from 10 to 90 parts by weight of a polyphenylene ether resin and,

(b) from 90 to 10 parts by weight of a rubber modified polystyrene resin, the preferred range being from 20-80 parts by weight of (a) and 80-20 parts by weight of (b). The rubber modified polystyrene contains a disperse phase of particles as described above, of polystyrene englobed with a polybutadiene or rubbery copolymer of butadiene with up to about 60 % by weight of polystyrene. Most preferably, in the rubber modified polystyrene component, the rubber will comprise from about 60 to 15 % by weight.

It has been found that compositions containing about 60-80 % of component (a) are tough and transparent or substantially transparent. Clarity and color are also improved by the addition of (c) a plasticizing flame-retardant, such as a triaryl phosphate. The preferred triaryl phosphate is triphenyl phosphate. Mixed triaryl phosphate with one or more isopropyl groups on some or all of the aryl rings, such as KRONITEX 50 supplied by Food Machinery Corp. In general,

the amount of (c) will be about 5-20 parts by weight per hundred parts (phr) of components (a) and (b).

Methods to determine the morphology of resin systems are well known to those skilled in the art. One convenient method comprises examination of electron microscope photographs of mounted, sectioned specimens. Two such photographs are shown in FIGS. 1 and 2. The techniques are well known to those skilled in the art and are described in Encyclopedia of Polymer Science and Technology, Vol. 13, John Wiley & Son, Inc. New York (1970), p. 400, and in references cited therein, as well as in the above-mentioned British Patent N° 1,180, 085, page 3. In the same references, the standard calculations used to measure average particle size and membrane thickness are also outlined. By inspection also, using, for example, a 1 µm bench mark printed in the electron photomicrographs, such as in FIG. 1 and 2, it is easy to determine whether the discontinuous, dispersed phase meets the size requirements set forth herein.

The compositions of this invention generally consist of a mixture of two phases, the continuous phase being a matrix of polyphenylene oxide resin and styrene resin in which there is a discontinuous gel phase dispersed comprising particles of polystyrene englobed with diene rubber membranes of the morphology herein above described, namely, having the particle size and spherical shape and in addition meeting the other above-mentioned requirements. It is important that the particles dispersed as shown in FIG. 3, comprise more than 50 % and preferably to at least about 60 % of the total number of rubber particles.

The present compositions are prepared by combining such a rubber modified polystyrene resin with the polyphenylene ether. The particles of the elastomer enveloping polystyrene are provided e.g., by polymerizing styrene in the presence of dissolved rubber under conditions to be specified whereby a continuous phase of such particles becomes dispersed in a polystyrene matrix. The particle size and form in the final composition is kept substantially the same by using blending techniques, e.g., extrusion or milling, which avoid particle degradation.

The polyphenylene ethers with which this invention is concerned are fully described in the above-mentioned references. The polyphenylene ethers are self-condensation products of monohydric monocyclic phenols produced by reacting the phenols with oxygen in the presence of complex copper catalysts. In general, molecular weight will be controlled by reaction time, longer times providing a higher average number of repeating units.

A preferred family of polyphenylene ethers will have repeating structural units of the formula :

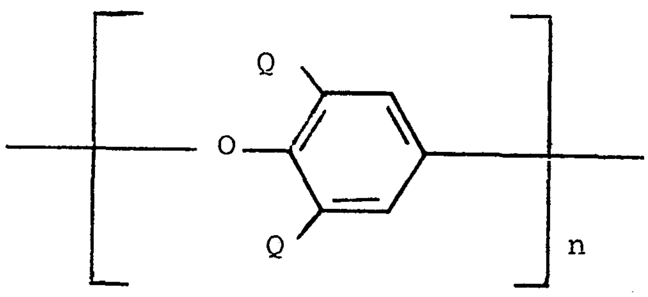

wherein the oxygen ether atom of one unit is connected to the benzene nucleus of the next adjoining unit, n is a positive integer and is at least 50, and each Q is a monovalent substituent selected from the group consisting of hydrogen, halogen, hydrocarbon radicals free of a tertiary alpha-carbon atoms, halohydrocarbon radicals having at least two carbon atoms between the halogen atom and the phenyl nucleus, hydrocarbonoxy radicals and halohydrocarbonoxy radicals having at least two carbon atoms between the halogen atom and the phenyl nucleus.

Illustrative members are : poly(2,6-dilauryl-1,4-phenylene) ether ; poly(2,6-diphenyl-1,4-phenylene)ether ; poly(2),6-dimethoxy -1,4-phenylene)ether ; poly(2,6-diethoxy-1,4-phenylene)ether ; poly(2-methoxy-6-ethoxy-1,4-phenylene) ether ; poly(2-ethyl-6-stearyloxy-1,4-phenylene)ether ; poly(2,6-dichloro-1,4-phenylene)ether ; poly(2-methyl-6-phenyl-1,4-phenylene)ether ; poly(2,6-dibenzyl-1,4-phenylene) ether ; poly(2-ethoxy-1,4-phenylene)ether ; poly(2-chloro-1,4-phenylene)ether ; poly(2,6-dibromo-1,4-phenylene)ether ; and the like. Examples of polyphenylene ethers corresponding to the above formula can be found in the above referenced patents of Hay and Stamatoff.

For purposes of the present invention an especially preferred family of polyphenylene ethers includes those having alkyl substitution in the two positions ortho to the oxygen ether atom, i.e., those of the above formula wherein each Q is alkyl, most preferably having from 1 to 4 carbon atoms. Illustrative members of this class are : poly(2,6-dimethyl-1,4-phenylene)ether ; poly(2,6-diethyl-1,4-phenylene)ether ; poly(2-methyl-6-ethyl-1,4-phenylene)ether ; poly(2-methyl-6-propyl-1,4-phenylene)ether ; poly(2,6-dipropyl-1,4-phenylene) ether ; poly(2-ethyl-6-propyl-1,4-phenylene)ether ; and the like.

The most preferred polyphenylene ether resin for purposes of the present invention is poly(2,6-dimethyl-1,4-phenylene)ether. This resin readily forms a compatible and single phase composition with the relevant polystyrene resins over the entire range of combining ratios.

Suitable polystyrene matrix resins are derived from a monovinyl aromatic monomer, e.g., one having the formula :

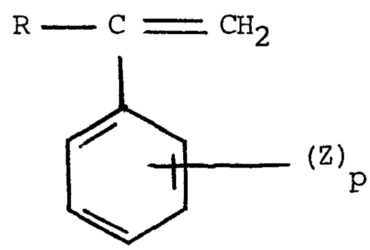

wherein R is hydrogen, (lower) alkyl, e.g., of from 1 to 4 carbon atoms or halogen ; Z is hydrogen, vinyl, halogen or (lower) alkyl ; and p is 0 or a whole number of from 1 to 5. Illustrative polystyrene matrix resins include homipolymers of polystyrene ; polychlorostyrene ; poly-a-methylstyrene, polyvinyl toluene ; and the like, or mixtures of the foregoing. These resins will also comprise the inclusions in the diene rubber membrane envelopes. The most preferred polystyrene is homopolystyrene.

The "rubber" used to envelope the polystyrene resin and provide the disperse phase includes polymeric

materials, natural and synthetic, which are elastomers at room temperatures, e.g., 20 to 25°C. The term "rubber" includes, therefore, natural or synthetic rubbers of the diene elastomer type generally used in preparing impact polymers. All such rubbers will form a two phase system with the polystyrene resin, and will comprise the discontinuous phase in the impact resistant polystyrene resin composition. Illustrative rubbers for use in this invention are natural rubber and polymerized diene rubbers, e.g., polybutadiene, polyisoprene, and the like, and copolymers of such dienes with vinyl monomers, e.g., vinyl aromatic monomers, such as styrene. Examples of suitable rubbers or rubbery copolymers are natural crepe rubber, synthetic SBR type rubber containing from 40 to 98 % by weight of butadiene and from 60 to 2 percent by weight of styrene prepared by either hot or cold emulsion polymerization, synthetic GR-N type rubber containing from 65 to 82 percent by weight of butadiene and from 35 to 18 percent by weight of acrylonitrile, and synthetic rubbers prepared from, for example, butadiene, butadienestyrene or isoprene by methods, employing heterogeneous catalyst systems, such as a trialkylaluminum and a titanium halide, for example. Among the synthetic rubbers which may be used in preparing the present compositions are elastomeric modified diene homopolymers, e.g., hydroxy- and carboxy-terminated polybutadienes ; polychlorobutadienes, e.g., neoprenes ; copolymers of dienes, e.g., butadiene and isoprene, with various comonomers, such as alkyl unsaturated esters, e.g., methyl methacrylate ; unsaturated ketones, e.g., methylisopropenyl ketone, vinyl heterocyclics, e.g., vinyl pyridine ; and the like. The preferred rubbers comprise polybutadiene and rubbery copolymers of butadiene with styrene. Such preferred rubbers are widely used in forming rubber modified high impact polystyrene resins with a broad range of properties.

A suitable method for preparing the rubber modified polystyrene having particles of the type described above, and used in the present compositions is derived from the general disclosure described by Echte in Angewandte Makromolekulare Chemie 58/59 p. 175 (1977).

In general rubber modified polystyrene having particles of the type described above are conveniently prepared by polymerization of solutions in styrene of styrene-butadiene block copolymers having suitable molecular weights and styrene-butadiene ratios as described in the aforesaid Angewandte Makromolekulare Chemie publication. Such a polystyrene is one obtained from a diblock copolymer containing 70 % butadiene and 30 % styrene with a polystyrene block length of 49,000. An example of a rubber-modified polystyrene having the morphology herein above described which is employed in the invention is know as BASF 2791 which has been mentioned heretofore.

As is described in the above-mentioned U.S. Patent N° 3,383,435, polyphenylene ethers and polystyrene resins are combinable with each other in all proportions and they exhibit a single set of thermodynamic properties. The present compositions therefore can comprise from 1 to 99% by weight polyphenylene ether resin and from 99 to 1 % by weight polystyrene resin, and these are included within the scope of the invention. In general, compositions in which the polyphenylene ether resin comprises from about 10 to about 90 % and the rubber-modified polystyrene, by weight of the total resinous components, are preferred because after molding they have the best combination of impact strength, and surface gloss. Particularly useful and preferred are compositions in which the polyphenylene resin component comprises from about 20 to 80 % by weight of the combined weight of the total resinous components in the composition. Impact strength and surface gloss appear to be at a maximum in such preferred compositions, and transparency in the range of about 60-80 %.

The method used to form the compositions of the invention is not critical provided that it permits efficient dispersion and mixing. The preferred method is one in which the polyphenylene ether is mixed with the rubber modified polystyrene using any conventional mixing method and the composition so formed is molded to any desired shape such as by extrusion, hot molding, injection molding, and the like.

It should, of course, be obvious to those skilled in the art that other additives may be included in the

present compositions such as plasticizers, pigments, flame retardant additives, reinforcing agents, such as glass filaments or fibers, stabilizers, and the like.

The advantages obtained by providing compositions of a polyphenylene ether resin and a rubber modified polystyrene of the specified morphology are set forth in the following examples which further illustrate the invention but are not to be construed as limiting the invention. Parts are by weight.

The physical tests set forth in the tables are carried out by the following procedures 3,175 mm notched Izod Impact Strength, ASTM D-256 ; elongation (Elong) at break, ASTM D-639, [Tensile yield strength (T.Y.), ASTM D-638 ; Heat-Deflection-Temperature (HDT), ASTM D-648 ; Gardner Falling Dart Impact, and Gloss] . For comparison purposes, control specimens are also prepared.

EXAMPLE 1

A mixture of 50 parts of poly(2,6-dimethyl-1,4-phenylene)ether having an intrinsic viscosity of 0.40-0.65 dl./g. measured in $CHCl_3$ at a temperature of 30°C, and 50 parts of BASF 2791 polystyrene, (a rubber modified polystyrene resin comprising a continuous polystyrene phase containing dispersed particles consisting largely of a core of polystyrene in a shell of diene rubber membrane, said particles being spherical in shape, highly uniform in size, of from about 0.2 to 0.4 µm, with an average diameter of 0.3 µm), 1.5 parts of polyethylene, 1 part of diphenyldecyl phosphite, 3 parts of triphenyl phosphate, 0.15 parts of zinc sulfide and 0.15 parts of zinc oxide was extruded at 293°C in a 28 mm. twin-screw extruder. The extruded pellets were molded into standard test pieces at 271°C in a 85 g screw injection molding machine. For comparison, blends were similarly prepared from BASF-2790 polystyrene and Foster-Grant 834 polystyrene, described hereinabove. The blends with BASF-2791 had higher Izod and Gardner impact strength and greater surface gloss. The results of testing of the compositions are set forth in the following table :

| Polystyrene | Elong. (%) | T.Y. ($daN/mm^2$) | Izod Impact (J/cm) | Gardner Impact (J) | HDT (°C) | Gloss (Units) (45°) |
|---|---|---|---|---|---|---|
| BASF 2791 | 50 | 6,75 | 2,135 | 28.76 | 114 | 65.7 |
| BASF 2790 | 40 | 6,89 | 1,495 | 25.75 | 114 | 52.9 |
| FG-834 | 51 | 6,75 | 1,868 | 11.50 | 118 | 50.8 |

EXAMPLE 2

A mixture of 60 parts of polyphenylene ether (PPO) described in Example 1, 40 parts of BASF 2791 polystyrene (PS), 0.15 parts of zinc sulfide, 0.15 parts of zinc oxide, and 1 part of diphenyldecyl phosphite was extruded in a single screw extruder and then molded as described in Example 1, along with control blends of the same composition with BASF-2790 or FG-834 in place of BASF-2791.

Mixtures of 80 parts of PPO and 20 parts of the above mentioned polystyrenes (BASF-2791, BASF-2790 and FG-834) were extruded and molded in the same way. Impact strength and gloss were highest in the blend containing BASF-2791 in both compositions, as compared with the blends containing the other polystyrenes as shown in the table below.

A mixture of 90 parts of PPO and 10 parts of BASF 2791 polystyrene was extruded and molded in the same way. The properties are also included in the table.

| Polystyrene | PPO:PS | Izod | Gardner | HDT | Gloss |
|---|---|---|---|---|---|
| BASF 2791 | 60:40 | 2,188 | 25.89 | 133 | 66.4 |
| BASF 2790 | 60:40 | 1,601 | 14.38 | 133 | 54.5 |
| FG-834 | 60:40 | 1,868 | 14.38 | 134 | 51.7 |
| BASF 2791 | 80:20 | 1,868 | 25.89 | 156 | 63.5 |
| BASF 2790 | 80:20 | 1,388 | 4.60 | 151 | 50.2 |
| FG-834 | 80:20 | 1,548 | 8.63 | 151 | 50.7 |
| BASF 2791 | 90:10 | 1,334 | 14.38 | 161 | 60.0 |

EXAMPLE 3

Example 1 was repeated with the addition of 3 phr of $TiO_2$ to each blend. The test results are as follows :

| Polystyrene | Elong | T.Y. | Izod | Gardner | HDT | Gloss (Units) |
|---|---|---|---|---|---|---|
| BASF 2791 | 75 | 6.89 | 1.922 | 20.13 | 112 | 63.3 |
| BASF 2790 | 57 | 6.89 | 1.495 | 3.75 | 113 | 58.7 |
| FG-834 | 65 | 6.62 | 1.922 | 14.38 | 117 | 54.1 |

EXAMPLE 4

A mixture of 60 parts of BASF 2791 polystyrene, 40 parts of PPO and 3 parts of titanium dioxide was extruded in a twin-screw extruder and molded as described in Example 1. Blends of this same composition, with BASF 2791 replaced by BASF-2790 polystyrene, Foster Grant 834 polystyrene, or Monsanto HT-91 polystyrene were similarly prepared. Monsanto HT-91 is a high impact polystyrene containing about 6 % by weight of polybutadiene, suspension grafted, about 95 percent of the particles being greater than 0.5 µm in size. It is sold by the Monsanto Co.

The test results are as follows :

| Polystyrene | Izod | Gardner | HDT | Gloss (Units) |
|---|---|---|---|---|
| BASF 2791 | 1.548 | 14.38 | 114 | 64.1 |
| BASF 2790 | 1.121 | 1.72 | 116 | 61.9 |
| FG-834 | 1.703 | 5.75 | 114 | 55.0 |
| HT-91 | 0.694 | 1.15 | 121 | 58.2 |

EXAMPLE 5

A mixture of 60 parts BASF 2791 polystyrene, 40 parts PPO, 1.5 parts polyethylene, 8 parts triphenyl phosphate, 0.5 parts diphenyl decyl phosphite, 3 parts titanium dioxide, 0.15 parts of zinc sulfide and 0.15 parts of zinc oxide was extruded and molded as described in Example 1, along with a control blend make with Amoco 6H6 a high-gloss polystyrene, available from Amoco Chemical Co. The composition containing BASF 2791 had higher impact strength than the control. Surface gloss of plaques molded with a mold temperature of 54°C was as good as that obtained with the control at 84,5°C. The test results are set forth in the following table :

| Property | Amoco 6H6 | BASF 2791 |
|---|---|---|
| Elongation | 68 % | 78 % |
| T.Y. | 4.96 | 5.51 |
| T.S. | 4.55 | 4.89 |
| Izod (22.8°C) | 1.495 | 2.135 |
| Izod (-40 °C) | 0.694 | 0.747 |
| Gardner | 17.25 | 25.89 |
| HDT | 94 | 94 |
| Gloss (54°C mold) | 54.8 | 60.8 |
| Gloss (84.5°C mold) | 60.9 | 62.8 |

EXAMPLE 6

PPO was mixed with BASF 2791 rubber-modified polystyrene and extruded in a twin screw extruder as described in Example 1 to produce blends containing 10 %, 15 % and 20 % PPO. To assure uniformity each blend was then re-extruded in the same machine. The extruded pellets were molded in an injection molding machine as described in Example 1 and properties were compared to those of BASF 2791 alone without addition of PPO. As little as 10 % PPO produces a significant increase in HDT and tensile strength, but Gardner impact strength is reduced. With 20 % PPO Gardner impact strength is not reduced and all other properties are improved. The test results are set forth in the following table :

| % PPO | HDT | Tensile Strength | Elong. | Izod Impact | Gardner Impact |
|---|---|---|---|---|---|
| 0 | 35 | 3.99 | 30 | 1.014 | 5.75 |
| 10 | 89 | 4.62 | 37 | 1.281 | <0.57 |
| 15 | 95 | 5.17 | 24 | 0.961 | <0.57 |
| 20 | 100 | 5.51 | 61 | 1.601 | 5.75 |

EXAMPLE 7

Blends of PPO and BASF 2791 rubber-modified polystyrene (PS) were prepared as described in Example 2 at PPO:PS ratios of 60:40, 70:30, and 80:20. No zinc salts were included ; each blend contained 1 phr of diphenyldecyl phosphite and 12 phr of triphenyl phosphate. A 60:40 blend with Foster Grand 834 polystyrene was also prepared in the same way. The blends containing BASF 2791 were transparent, while the blend containing Foster Grant 834 was almost completely opaque. Properties are listed in the following table :

| PPO:PS | PS | Izod | Gardner | Appearance |
|---|---|---|---|---|
| 60:40 | BASF 2791 | 2.669 | 23.01 | Transparent |
| 60:40 | FG 834 | 1.601 | 17.26 | Opaque |
| 70:30 | BASF 2791 | 2.456 | 25.89 | Transparent |
| 80:20 | BASF 2791 | 1.975 | 28.76 | Transparent |

It is thus seen that compositions according to this invention have a greater impact strength, transparency and gloss than that of any of the controls.

Other modifications can be made, based on the teachings of the foregoing specific examples.

For example, if the procedure of Example I is repeated, substituting for the polystyrene modified with polybutadiene, a polystyrene containing 10 % by weight of rubber derived from a rubbery styrene butadiene copolymer containing 60 % of butadiene units and 40 % of styrene units, by weight, a composition according to this invention will be obtained.

If the procedure of the Examples are repeated and the following polyphenylene ethers are substituted for poly (2,6-dimethyl-1,4-phenylene)ether in the formulation :

poly(2,6-diethyl-1,4-phenylene)ether ;
poly(2-methyl-6-ethyl-1,4-phenylene)ether ;
poly(2-methyl-6-propyl-1,4-phenylene)ether ;
poly(2,6-dipropyl-1,4-phenylene)ether, and
poly(2-ethyl-6-propyl-1,4-phenylene)ether,

compositions according to this invention will be obtained.

The compositions of the subject invention can be formed into films, fibers and molded articles. They can be used to make molded products, such as housings, cabinets, frames, for appliances, business machines, etc. pump housings, impellers, filters, and the like. They may be mixed with various fillers and modifying agents, such as dyes, pigments, stabilizers and plasticizers, and the like.

All of the foregoing patents and/or publications are incorporated herein by references. Obviously, other modifications and variations of the present invention are

possible in the light of the above teachings. It is, therefore, to be understood that changes may be made in the particular embodiments of the invention described which are within the full intended scope of the invention as defined by the appended claims.

CLAIMS

1. A thermoplastic composition comprising :
(a) a polyphenylene ether resin ; and
(b) a rubber modified polystyrene resin,
said rubber modified polystyrene resin comprising a continuous polystyrene phase containing dispersed particles consisting largely of a core of polystyrene in a shell of diene rubber membrane, said particles being spherical in shape, highly uniform in size, of from about 0.2 to 0.4 µm with an average diameter of 0,3 µm said composition when molded having a high impact strength and surface gloss.

2. A composition as defined in claim 1 wherein said rubber modified polystyrene resin contains from about 6 to about 15 % by weight of said diene rubber.

3. A composition as defined in claim 1 wherein said diene rubber is a polybutadiene or a rubbery copolymer of styrene and butadiene.

4. A composition as defined in claim 1 wherein said polyphenylene ether resin comprises from about 10 to about 90 % by weight of the combined weight of the total resinous component in the composition.

5. A composition as defined in claim 4 wherein said polyphenylene ether resin comprises from about 20 to about 80 % by weight of the combined weight of the total resinous components in the compositions.

6. A composition as defined in claim 1 wherein said polyphenylene ether has the repeating structural formula :

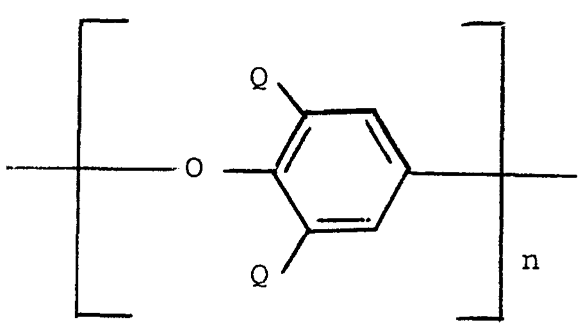

wherein the oxygen ether atom of one unit is connected to the benzene nucleus of the next adjoining unit, n is a positive integer and is at least 50, and each Q is a monovalent substituent selected from the group consisting of hydrogen, halogen, hydrocarbon radicals free of a tertiary alpha-carbon, halohydrocarbon radicals having at least two carbon atoms between the halogen atom and the phenyl nucleus, hydrocarbonoxy radicals and halohydrocarbonoxy radicals having at least two carbon atoms between the halogen atom and the phenyl nucleus.

7. A composition as defined in claim 1, which contains 50-80 parts of component (a) and 20-50 parts of component (b), said composition when molded having a high impact strength, transparency and surface gloss.

8. A composition as defined in claim 1, which contains (c), a plasticizing flame-retardant.

9. A composition as described in claim 8, wherein (c) is a triaryl phosphate in an amount of about 5 to about 20 parts by weight per hundred parts of components (a) and (b).

10. A composition as described in claim 9, wherein the triaryl phosphate is triphenyl phosphate.

11. A composition as defined in claim 6 wherein Q is alkyl having from 1 to 4 carbon atoms.

12. A composition as defined in claim 11 wherein Q is methyl.

13. A molded composition having high impact strength, transparency and surface gloss obtained by molding the composition claimed in claim 1.

14. A molded composition having high impact strength, transparency and surface gloss obtained by molding the composition described in claim 6.

15. A process for preparing the composition described in claim 1, which comprises mixing and dispersing the components (a) and (b) to form a blend thereof.

16. A process according to claim 15, wherein the resulting blend is formed to any desired shape.

0054900

17. A process according to claim 16, wherein the blend is formed into any desired shape by hot molding.

18. A process according to claim 16, wherein the blend is formed into any desired shape by injection molding.

19. A process according to claim 16, wherein the blend is formed into any desired shape by extrusion molding.

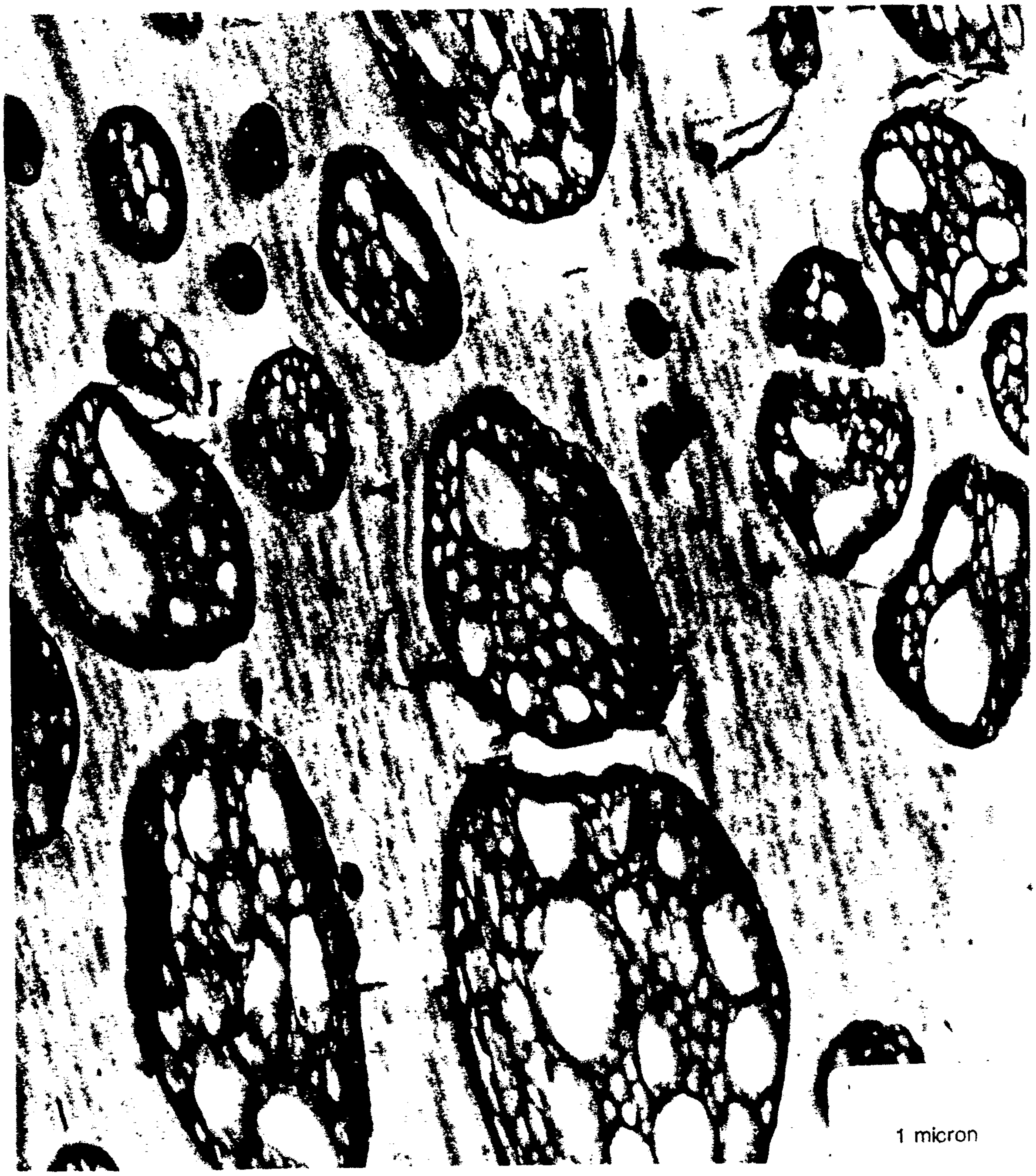


FIG. 1

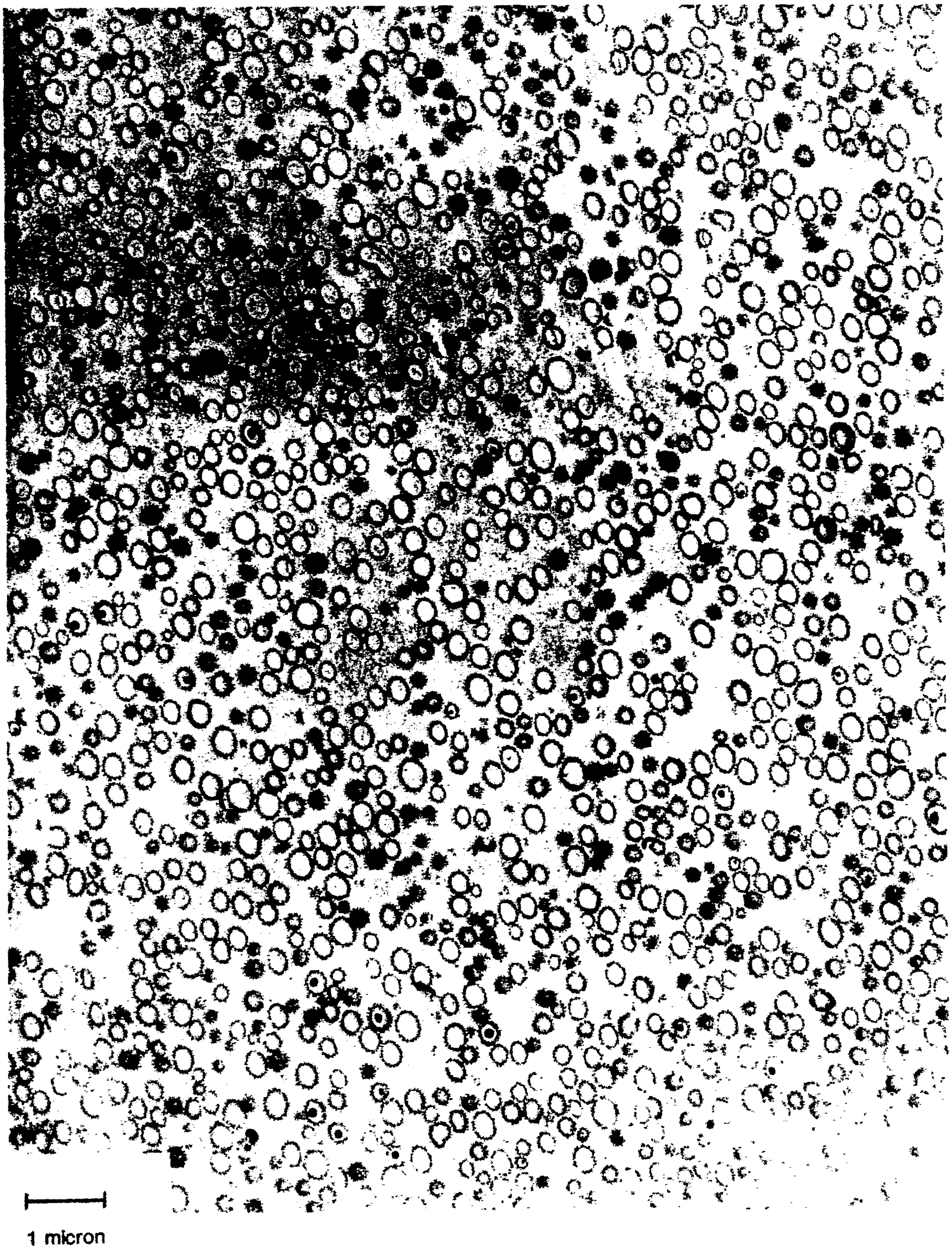


FIG. 2

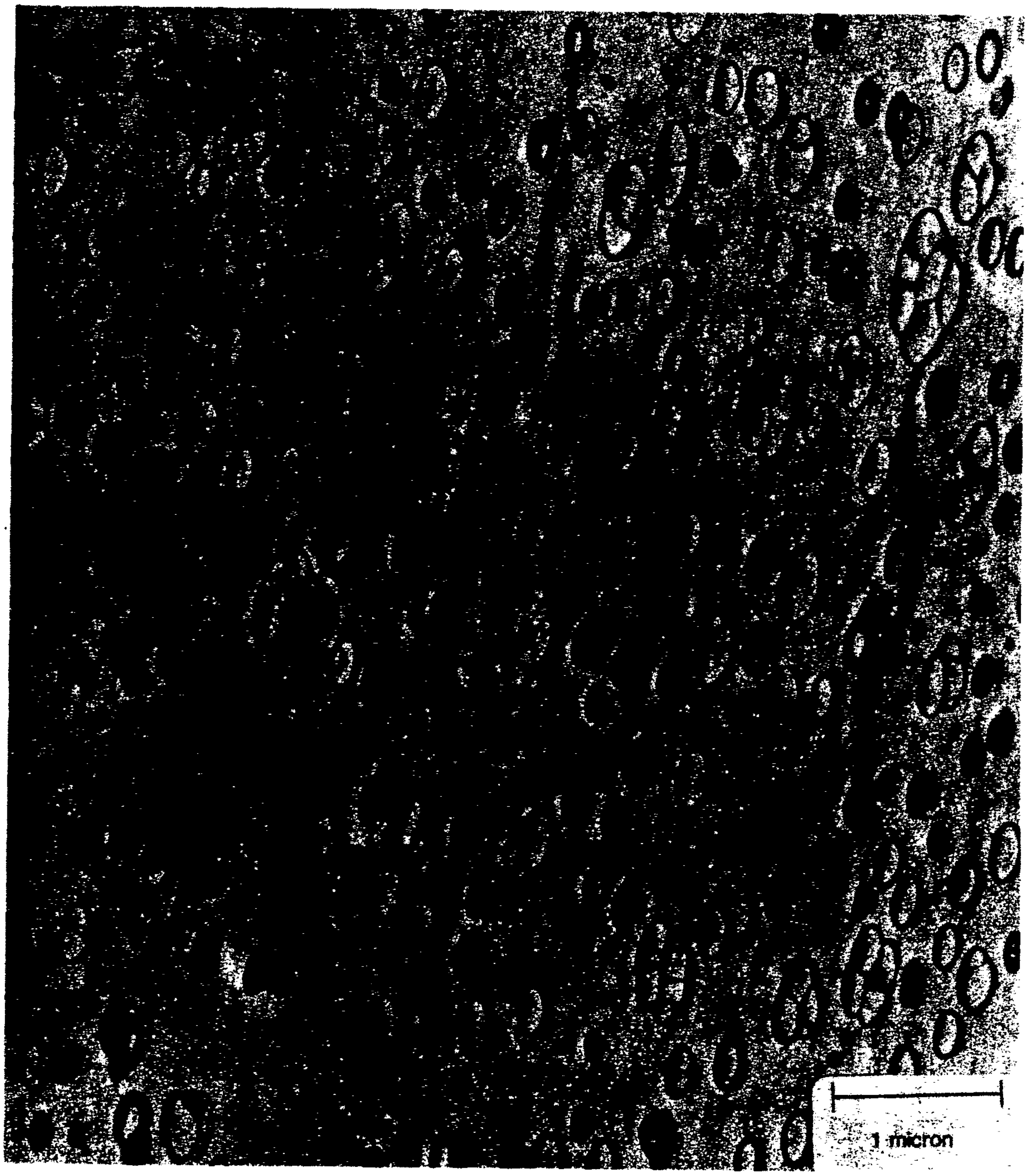


FIG. 3

0054900

Application number

European Patent Office

# EUROPEAN SEARCH REPORT

EP 81 11 0489.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | DD - A - 96 494 (GENERAL ELECTRIC CO.)<br>* column 3, line 39 to column 9, line 52; examples 2, 3 *<br>-- | 1-6, 8-12, 15-19 | C 08 L 71/04<br>C 08 L 25/10 |
| Y | FR - A - 2 090 643 (GENERAL ELECTRIC CO.)<br>* page 2, line 28 to page 7, line 5 *<br>-- | 1,3,6 | |
| Y | DD - A - 133 964 (GENERAL ELECTRIC CO.)<br>* claims 1, 2, 16 to 18 *<br>-- | 8-10 | TECHNICAL FIELDS SEARCHED (Int.Cl. 3) |
| D,A | GB - A - 1 180 085 (TOYO RAYON K.K.)<br>* claim 1 *<br>-- | 1 | C 08 L 25/10<br>C 08 L 71/04 |
| A | "Encyclopedia of Polymer Science and Technology", Vol. 13<br>1970, INTERSCIENCE PUBLISHERS<br>* page 400, line 25 to page 404, line 18 *<br>---- | 1 | |

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| Berlin | 16-03-1982 | IDEZ |

EPO Form 1503.1 06.78